# EUROPÄISCHE PATENTANMELDUNG

(11) **EP 1 316 479 A2**
(43) Veröffentlichungstag der Anmeldung: **04.06.2003**
(21) Anmeldenummer: 02025802.6
(22) Anmeldetag: 18.11.2002
(51) Int. Cl.: B60R 19/24

(54) **Stossfängerhalter und Stossfänger für Kraftfahrzeuge**

(30) Priorität: 23.11.2001 DE 10157481
(71) Anmelder: Dynamit Nobel Kunststoff GmbH, 91781 Weissenburg (DE)
(72) Erfinder: Burkhardt, Steffen, 71083 Herrenberg (DE); Preissler, Dietmar, 91781 Hagenbuch (DE); Sautner, Anton, 91757 Treuchtlingen (DE)
(74) Vertreter: Scherzberg, Andreas, Dr.

(57) **Zusammenfassung**

1. Stoßfängerhalter, Stoßfänger und Kraftfahrzeug mit Stoßfänger.
2.1. Die Erfindung betrifft einen Stoßfängerhalter zur Verbindung eines Kraftfahrzeug-Stoßfängers mit einer Kraftfahrzeugkarosserie, wobei der Stoßfängerhalter als plastisch verformbares Metallteil ausgebildet und mit Sicken versehen ist.
2.2. Erfindungsgemäß ist der Stoßfängerhalter kastenprofilförmig ausgebildet.
2.3. Verwendung z.B. für reparaturfreundliche Kraftfahrzeug-Stoßfänger.

## Beschreibung

Die Erfindung betrifft einen Stoßfängerhalter zur Verbindung eines Kraftfahrzeug-Stoßfängers mit einer Kraftfahrzeugkarosserie, wobei der Stoßfängerhalter als energieabsorbierend verformbares Metallteil ausgebildet und mit Sicken versehen ist. Die Erfindung betrifft auch einen Kraftfahrzeug-Stoßfänger mit einem Grundkörper und einem erfindungsgemäßen Stoßfängerhalter. Darüber hinaus betrifft die Erfindung ein Kraftfahrzeug mit einem erfindungsgemäßen Stoßfänger.

Aus der deutschen Offenlegungsschrift DE 197 00 022 A1 ist ein energieabsorbierend verformbarer Halter für ein Kraftfahrzeug-Stoßfänger bekannt, der zwischen Stoßfänger und Karosserie angeordnet ist. Um eine kontrollierte Verformung des Halters bei einem Aufprall zu ermöglichen, ist der Halter als Blechtopf ausgebildet und mit vorgezeichneten, sickenartigen Faltlinien versehen. Dadurch ergibt sich eine zwar stabile und dabei kontrolliert verformbare Struktur, die aber vergleichsweise kostenintensiv als Blechpress- oder Blechziehteil herzustellen ist.

Aus der deutschen Auslegeschrift DE 1 289 441 ist ein Kraftfahrzeug-Stoßfänger bekannt, der mittels eines federnden Bügels an einer Karosserie befestigt ist. Deformationskörper für eine' Energieaufnahme sind ober- und unterhalb des Stoßfängers angeordnet.

Mit der Erfindung soll ein energieabsorbierender Stoßfängerhalter geschaffen werden, der bei sicherer Funktion kostengünstig herstellbar ist.
Erfindungsgemäß ist hierzu ein Stoßfängerhalter zur Verbindung eines Kraftfahrzeug-Stoßfängers mit einer Kraftfahrzeugkarosserie vorgesehen, wobei der Stoßfängerhalter als energieabsorbierend verformbares Metallteil ausgebildet und mit Sicken versehen ist und wobei der Stoßfängerhalter kastenprofilförmig ausgebildet ist.

Als kastenprofilförmiges Metallteil, vorzugsweise als Blechbiegeteil, kann der Stoßfängerhalter einerseits kostengünstig hergestellt werden, beispielsweise als Abschnitt eines Kastenprofilträgers, und wirkt andererseits bei einem Aufprall als Energieabsorber mit definierter Verformungsrichtung. Durch den kastenprofilförmigen Querschnitt ist der Stoßfängerhalter in Längsrichtung, parallel zu seinen offenen Seitenflächen, sehr steif, so daß er den Stoßfänger in seiner Z-Position hält, senkrecht hierzu dahingegen definiert verformbar.

In Weiterbildung der Erfindung sind die Sicken in zwei gegenüberliegenden Wandungen des kastenprofilförmigen Metallteils vorgesehen und erstrecken sich zwischen den offenen Seiten des kastenprofilförmigen Metallteils jeweils über die gesamte Breite dieser Wandungen.

Auf diese Weise sind die Sicken in einfacher Weise, beispielsweise durch Biegen eines Blechstreifens, herstellbar. Durch Vorsehen der Sicken in gegenüberliegenden Wandungen, vorzugsweise den Langseiten des zweiseitig offenen Kastenprofils, die sich im Einbauzustand in einer zu erwartenden Stoßri'chtung erstrecken, ergibt sich eine sichere, weitgehend definierte Verformung des Halters im Aufprallfall.

Das der Erfindung zugrundeliegende Problem wird auch mit einem Kraftfahrzeug-Stoßfänger mit einem Grundkörper und einem erfindungsgemäßen Stoßfängerhalter gelöst, bei dem der Grundkörper eine im wesentlichen quaderförmige Vertiefung aufweist, in der das kastenprofilförmige Metallteil des Stoßfängerhalters abschnittsweise aufgenommen ist, wobei die offenen Seiten des kastenprofilförmigen Metallteils im wesentlichen parallel zu einer zu erwartenden Stoßrichtung bei einem Fahrzeugaufprall angeordnet sind, eine erste, im wesentlichen senkrecht zu der erwartenden Stoßrichtung liegende stirnseitige Wandung des kastenprofilförmigen Metallteils wenigstens abschnittsweise an einer Bodenfläche der Vertiefung anliegt und die im wesentlichen parallel zu der zu erwartenden Stoßrichtung liegenden, mit Sicken versehenen Wandungen des kastenprofilförmigen Metallteils wenigstens abschnittsweise an Seitenflächen der quaderförmigen Vertiefung anliegen.

Durch diese Maßnahmen wird ein Ausweichen des Metallteils beim Aufprall verhindert, da die für eine Verformung vorgesehenen Wandungen, zweckmäßigerweise die Langseiten des kastenprofilförmigen Blechbiegeteils, nach außen durch die Seitenflächen der quaderförmigen Vertiefung abgestützt werden. Der Innenraum der quaderförmigen Vertiefung steht als Verformungsraum zur Verfügung, so dass ein maximal möglicher Verformungsweg ermöglicht ist. Gleichzeitig ist eine sichere Abstützung in Aufprallrichtung gegeben, indem die stirnseitige Wandung des Halters wenigstens abschnittsweise an der Bodenfläche der Vertiefung anliegt. Auf diese Weise ist auch eine verlässliche Befestigung des Stoßfängers im Normalbetrieb gegeben, wobei der Stoßfängerhalter an dem Grundkörper durch Raststifte und/oder Befestigungsbolzen gesichert werden kann.

In Weiterbildung der Erfindung ist der Grundkörper im Bereich der quaderförmigen Vertiefung käfigartig ausgebildet.

Auf diese Weise kann bei unverminderter Festigkeit eine Gewichtsersparnis erzielt werden. Der Käfig kann beispielsweise durch Seiten- oder Stirnflächen von Versteifungsrippen eines den Grundkörper bildenden Stoßfängerinnenteils gebildet sein.

Das der Erfindung zugrundeliegende Problem wird auch durch ein Kraftfahrzeug mit einem erfindungsgemäßen Stoßfänger gelöst, bei dem die Fahrzeugkarosserie im Stoßfängerbereich wenigstens eine, im wesentlichen senkrecht zu der zu erwartenden Stoßrichtung liegende ebene Stirnfläche aufweist, wobei eine zweite, ebenfalls im wesentlichen senkrecht zu der zu erwartenden Stoßrichtung liegende stirnseitige Wandung des kastenprofilförmigen Metallteils flächig an der ebenen Stirnfläche anliegt.

Mittels einer ebenen Stirnfläche an der Fahrzeugkarosserie kann eine sichere Abstützung des Stoßfängerhalters in der Stoßrichtung bei einem Aufprall sichergestellt werden.

In Weiterbildung der Erfindung ist die wenigstens eine ebene Stirnfläche an einem sich im wesentlichen entgegen der zu erwartenden Stoßrichtung erstreckenden Vorsprung vorgesehen..

Durch Vorsehen eines Vorsprungs wird einerseits die Fahrzeugkarosserie im Bereich der Stirnflächen, auf denen die Stoßfängerhalter aufliegen, stabilisiert und darüber hinaus wird ein gewisser Abstand zwischen der Fläche der Karosserie und dem Stoßfänger geschaffen. Auf diese Weise kann verhindert werden, dass sich bei einer Verformung des Stoßfängerhalters auch die Karosserie mit verformt.

In Weiterbildung der Erfindung ist die Stirnfläche mit einer ersten Bohrung und die an der Stirnfläche flächig anliegende zweite stirnseitige Wandung des kastenprofilförmige Blechbiegeteils mit einer zweiten Bohrung zur Anordnung eines Befestigungsbolzens versehen, wobei die erste und/oder die zweite Bohrung so dimensioniert sind, dass der Befestigungsbolzen in der ersten und/oder zweiten Bohrung spielbehaftet aufgenommen werden kann.

Durch diese Maßnahmen ist auf einfache Weise ein Toleranzausgleich vor dem Anziehen des Befestigungsbolzens möglich. Die erste und/oder die zweite Bohrung kann beispielsweise auch als Langloch ausgebildet sein.

Schließlich ist vorgesehen, dass der Durchmesser der ersten Bohrung im Bereich des doppelten Durchmessers des Befestigungsbolzens liegt.

Durch diese Merkmale können bei noch sicherer Befestigung am Halter bzw. der Karosserie im Normalfall auftretende Toleranzen ausgeglichen werden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine perspektivische Teilansicht eines erfindungsgemäßen Kraftfahrzeug-Stoßfängers bei abgenommener Stoßfängerverkleidung,
- Fig. 2: eine weitere perspektivische Ansicht des erfindungsgemäßen Kraftfahrzeug-Stoßfängers bei abgenommener Stoßfängerverkleidung,
- Fig. 3: eine Teilschnittansicht des erfindungsgemäßen Kraftfahrzeug-Stoßfängers und
- Fig. 4: eine perspektivische Teilansicht des erfindungsgemäßen Kraftfahrzeug-Stoßfängers nach einem Aufprall.

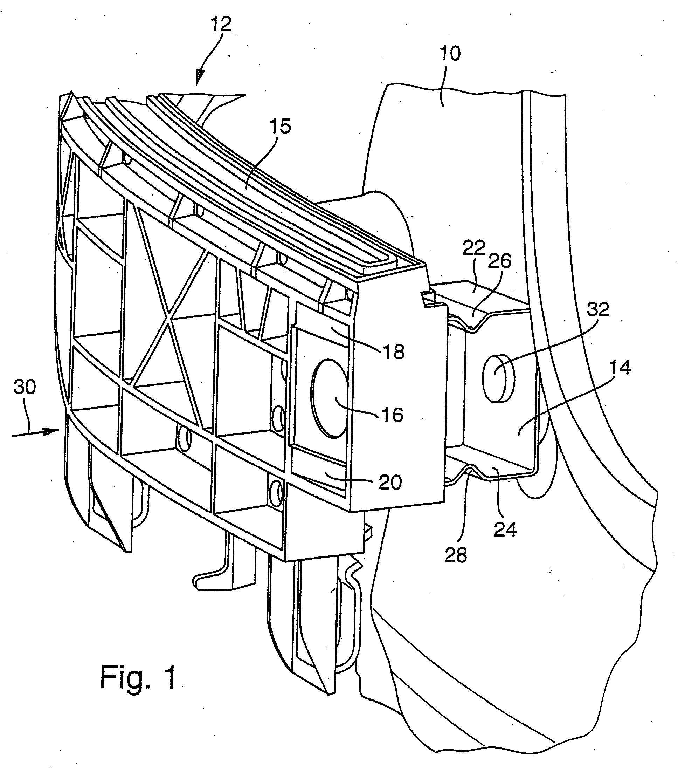

In der Darstellung der Fig. 1 ist ein Abschnitt einer Fahrzeugkarosserie 10 dargestellt. Die Fahrzeugkarosserie 10 ist in ihrem Heckbereich mit einem ebenfalls abschnittsweise dargestellten Stoßfänger 12 versehen. Der Stoßfänger 12 ist mit der Fahrzeugkarosserie 10 mittels eines Stoßfängerhalters 14 verbunden. Der Stoßfänger 12 ist mit abgenommener Stoßfängerverkleidung dargestellt, so dass lediglich ein Stoßfängerinnenteil 15 in der Fig. 1 zu erkennen ist. Das .Stoßfängerinnenteil 15 weist eine Rippenstruktur auf und nimmt den Stoßfängerhalter 14 in einer quaderförmigen Ausnehmung 16 abschnittsweise auf. Die Seitenflächen der quaderförmigen Ausnehmung 16 sind durch Seitenflächen der Rippen des Stoßfängerinnenteils 15 gebildet. Eine Bodenfläche der quaderförmigen Ausnehmung 16 weist ihrerseits eine Aussparung auf, so dass der Stoßfängerhalter 14 mit einer ersten stirnseitigen Wandung abschnittsweise auf einem oberen Abschnitt 18 und einem unteren Abschnitt 20 der Bodenfläche der käfigartig gestalteten quaderförmigen Ausnehmung 16 aufliegt. Die Sicken 26 und 28 sind von der ersten stirnseitigen Wandung so weit beabstandet, dass sie nach vollständigem Einschieben des Halters 14 in die quaderförmige Ausnehmung 16 noch außerhalb der Ausnehmung 16 liegen.

Der Stoßfängerhalter 14 selbst ist als Abschnitt eines Kastenprofils ausgebildet und so ausgerichtet, dass die offenen Seiten des Kastenprofilabschnitts in einer Richtung von dem Stoßfänger 12 auf die Karosserie 10 zu, d.h. in einer zu erwartenden Stoßrichtung bei einem Fahrzeugaufprall, rechts und links angeordnet sind. In dieser Richtung oben bzw. unten liegende Wandungen 22, 24 des Halters 14 sind länger als dessen stirnseitige Wandungen ausgebildet und jeweils mit einer im wesentlichen parallel zum Stoßfänger 12 verlaufenden Sicke 26 bzw. 28 versehen. Die Sicken 26 und 28 erstrecken sich jeweils über die gesamte Breite der oberen Wandung 22 bzw. der unteren Wandung 24. Die erste stirnseitige Wandung ist mit einer zentralen Bohrung versehen.

Die bei einem Aufprall zu erwartende Stoßrichtung auf den Stoßfänger 12 und den Stoßfängerhalter 14 ist in der Fig. 1 durch einen Pfeil 30 angedeutet. Bezogen auf diese zu erwartende Stoßrichtung 30 liegen die obere Wandung 22 und die untere Wandung 24 sowie die offenen Seiten des kastenprofilförmigen Halters 14 parallel zu dieser Richtung 30 und die Sicken 26 bzw. 28 verlaufen senkrecht zur Richtung 30. Erfolgt ein Aufprall und folglich eine Belastung des Stoßfängerhalters in der Richtung 30, so wird dieser gezielt deformiert, indem die obere Wandung 22 an der Sicke 26 nach innen, auf die untere Wandung 24 zu, gefaltet wird. In gleicher Weise wird die untere Wandung 24 an der Sicke 28 nach oben, auf die obere Wandung 22 zu, gefaltet. Senkrecht zur Stoßrichtung 30 ist der S'toßfängerhalter 14 dahingegen äußerst steif, so dass kein Ausscheren des Stoßfängers 12 in seitlicher Richtung zu befürchten ist. Ein Ausweichen der oberen Wandung 22 nach oben bzw. der unteren Wandung 24 nach unten wird einerseits durch die Formgebung der Sicken 26 und 28 und andererseits durch die quaderförmige Ausnehmung 16 verhindert. Da die obere Wandung 22 und die untere Wandung 24 innerhalb der quaderförmigen Ausnehmung 16 an deren Seitenflächen anliegen, können sie nicht nach oben bzw. unten ausweichen, sondern werden definiert aufeinander zu gefaltet.

An der Kraftfahrzeugkarosserie 10 ist der Stoßfängerhalter 14 mittels eines zentralen Befestigungsbolzens 32 befestigt.

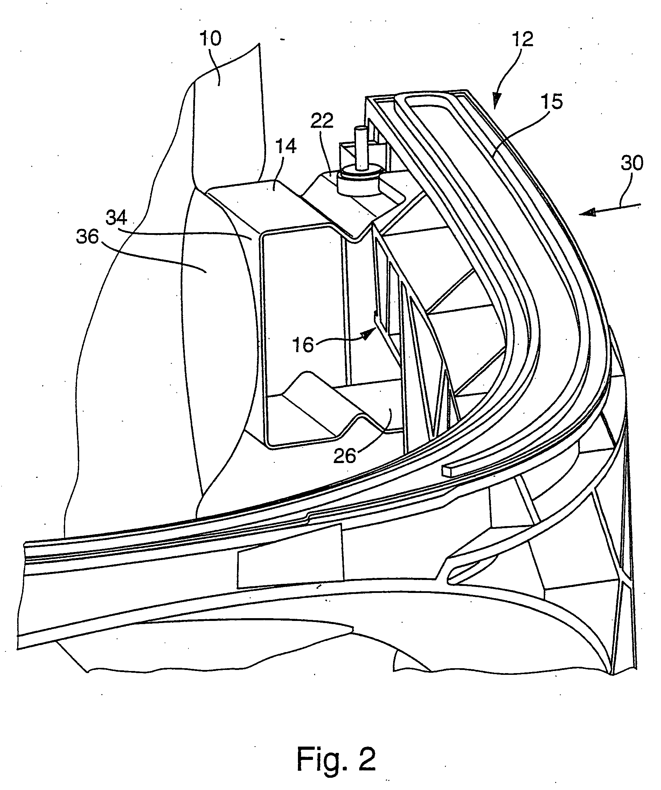

In der perspektivischen Darstellung der Fig. 2 ist die Rippenstruktur des Innenteils 15 des Stoßfängers 12 gut zu erkennen. Ebenfalls gut zu erkennen ist, dass der Stoßfängerhalter 14 abschnittsweise in der quaderförmigen Ausnehmung 16 in dem Stoßfängerinnenteil 14 aufgenommen ist und dass die obere Wandung 22 und die untere Wandung 24 des Stoßfängerhalters 14 in der Ausnehmung 16 an deren Seitenflächen anliegen.

Der kastenprofilförmige Stoßfängerhalter 14 liegt mit einer senkrecht zu der zu erwartenden Stoßrichtung 30 liegenden zweiten stirnseitigen Wandung 34, die eben ist, auf einer ebenfalls senkrecht zu erwartenden Stoßrichtung 30 liegenden Stirnfläche der Kraftfahrzeugkarosserie 10 auf. Dadurch ist eine sichere Abstützung des Stoßfängerhalters 14 in der zu erwartenden Stoßrichtung 30 gegeben. Die ebene Stirnfläche an der Kraftfahrzeugkarosserie 10 bildet die Stirnfläche eines Vorsprungs 36 der Kraftfahrzeugkarosserie 10, der sich entgegen der Stoßrichtung 30 erstreckt. Durch den Vorsprung 36 wird die Kraftfahrzeugkarosserie 10 örtlich versteift, so dass bei einem leichten Fahrzeugaufprall lediglich der Stoßfängerhalter 14 und nicht die Kraftfahrzeugkarosserie 10 verformt wird. Der Stoßfängerhalter 14 ist dabei so ausgelegt, dass das hintere Abschlussblech der Karosserie 10, an dem sich der Vorsprung 36 befindet, bis zur Aufprallgeschwindigkeiten von 15 km/h nicht beschädigt wird.

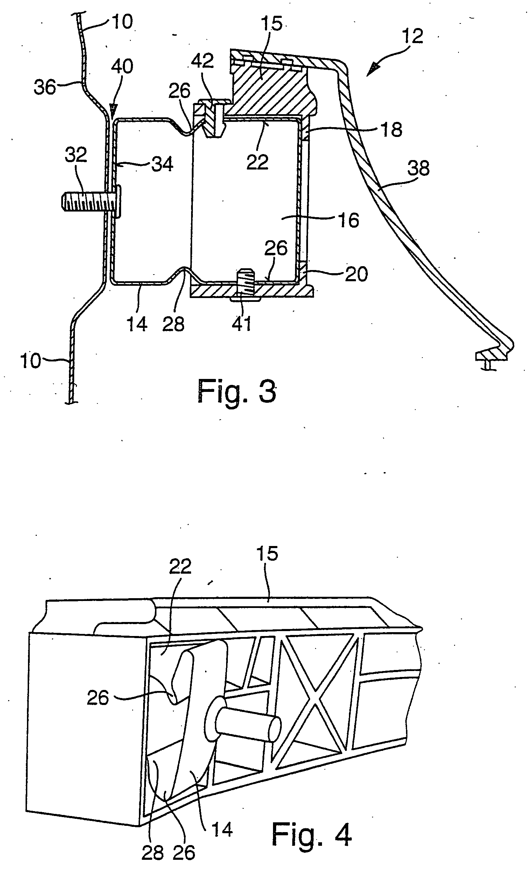

Die abschnittsweise Schnittdarstellung der Fig. 3 zeigt den Stoßfängerhalter 14, der mittels des Befestigungsbolzens 32 an der Kraftfahrzeugkarosserie 10 befestigt ist, das Stoßfängerinnenteil 15 sowie eine auf das Stoßfängerinnenteil 15 aufgesetzte Stoßfängerverkleidung 38. Die Stoßfängerverkleidung 38 und die Kraftfahrzeugkarosserie 10 sind in der Fig. 3 lediglich abschnittsweise dargestellt.

Die Karosserie 10 weist in der Stirnfläche 40 des Vorsprungs 36 eine zentrale Bohrung auf, durch die sich der Befestigungsbolzen 32 erstreckt. In der zweiten stirnseitigen Wandung 34 des Stoßfängerhalters 14 ist der Befestigungsbolzen 32 ebenfalls in einer zentralen Bohrung befestigt. Der Durchmesser der zweiten Bohrung in der Stirnfläche 40 der Karosserie 10 beträgt dabei etwa das Doppelte des Durchmessers des Befestigungsbolzens 32. Auf diese Weise können Toleranzen der Karosserie 10 bzw. des Stoßfängers 12 ausgeglichen werden.

In der Schnittansicht der Fig. 3 gut zu erkennen ist die quaderförmige Ausnehmung 16, in der ein Abschnitt des Stoßfängerhalters 14, der sich von der der Karosserie 10 abgewandten stirnseitigen Wandung bis zu den Sicken 26 und 28 erstreckt, aufgenommen ist. In diesem Abschnitt ist der Stoßfängerhalter 14 mittels eines weiteren. Befestigungsbolzens 40 sowie eines Klemmstiftes 42 an dem Stoßfängerinnenteil 14 befestigt. Ebenfalls gut zu erkennen ist, dass die obere Wandung 22 und die untere Wandung 26 jeweils an einer Seitenfläche der quaderförmigen Ausnehmung 16 anliegen. Die der Karosserie 10 abgewandte stirnseitige Wandung des Stoßfängerhalters 14 liegt an den Abschnitten 18 und 20 der Bodenfläche der quaderförmigen Ausnehmung 16 an. Auf diese Weise wird ein Ausweichen der oberen Wandung 22 und der unteren Wandung 26 im Falle eines Aufpralls nach oben bzw. unten vermieden und der Stoßfängerhalter 14 wird bei einem Aufprall definiert verformt.

Diesbezüglich ist zu beachten, dass dann, wenn sich im Falle eines Aufpralls die obere Wandung 22 nach unten, auf die untere Wandung 26 zu faltet, sie sich von dem Klemmstift 42 löst. Die untere Wandung 26 wird dahingegen im Bereich des Befestigungsbolzens 40 auch im Falle eines Aufpralls an dem Stoßfängerinnenteil 14 gehalten. Dadurch ist auch bei einem Aufprall nicht zu befürchten, dass sich der Stoßfänger 12 von der Karosserie 10 löst.

Die perspektivische Ansicht der Fig. 4 zeigt das Stoßfängerinnenteil 15 und den Stoßfängerhalter 14 nach einem leichten Aufprall. Zu erkennen ist, dass sich die obere Wandung 22 des Halters 14 im Bereich der Sicke 26 nach unten und sich die untere Wandung 26 im Bereich der Sicke 28 nach oben gefaltet hat. Die Energie des Aufpralls wurde damit in eine im wesentlichen definierte Verformung des Stoßfängerhalters 14 umgesetzt. Das Stoßfängerinnenteil 15 und die - nicht dargestellte - Karosserie 10 sind dabei unversehrt geblieben. Es muss daher lediglich der deformierte Stoßfängerhalter 14 ausgetauscht werden, um die Folgen des Aufpralls zu beseitigen.

## Patentansprüche

1. Stoßfängerhalter zur Verbindung eines Kraftfahrzeug-Stoßfängers (12) mit einer Kraftfahrzeugkarosserie (10), wobei der Stoßfängerhalter (14) als energieabsorbierend verformbares Metallteil ausgebildet und mit Sicken (26, 28) versehen ist,
**dadurch gekennzeichnet, dass**
der Stoßfängerhalter (14) kastenprofilförmig ausgebildet ist.

2. Stoßfängerhalter nach Anspruch 1,
**dadurch gekennzeichnet, dass**
der Stoßfängerhalter (14) als Blechbiegeteil ausgebildet ist.

3. Stoßfängerhalter nach Anspruch 1 oder 2,
**dadurch gekennzeichnet, dass**
die Sicken (26, 28) in zwei gegenüberliegenden Wandungen (22, 26) des kastenprofilförmigen Metallteils vorgesehen sind und sich zwischen den offenen Seiten des kastenprofilförmigen Metallteils jeweils über die gesamte Breite dieser Wandungen (22, 26) erstrecken.

4. Kraftfahrzeug-Stoßfänger mit einem Grundkörper (15) und einem Stoßfängerhalter (14) nach einem der vorstehenden Ansprüche,
**dadurch gekennzeichnet, dass**
der Grundkörper (15) eine im wesentlichen quaderförmige Vertiefung (16) aufweist, in der das kastenprofilförmige Metallteil des Stoßfängerhalters (14) abschnittsweise aufgenommen ist, wobei die offenen Seiten des kastenprofilförmigen Metallteils im wesentlichen parallel zu einer zu erwartenden Stoßrichtung (30) angeordnet sind, eine erste, im wesentlichen senkrecht zu der zu erwartenden Stoßrichtung (30) liegende stirnseitige Wandung des kastenprofilförmigen Metallteils wenigstens abschnittsweise an einer Bodenfläche (18, 20) der Vertiefung (16) anliegt und die im wesentlichen parallel zu der zu erwartenden Stoßrichtung (30) liegenden, mit Sicken (26, 28) versehenen Wandungen (22, 26) des kastenprofilförmigen Metallteils wenigstens abschnittsweise an Seitenflächen der quaderförmigen Vertiefung (16) anliegen.

5. Kraftfahrzeug-Stoßfänger nach Anspruch 4,
**dadurch gekennzeichnet, dass**
der Grundkörper (15) im Bereich der quaderförmigen Vertiefung (16) käfigartig ausgebildet ist.

6. Kraftfahrzeug mit einem Stoßfänger (12) nach einem der vorstehenden Ansprüche,
**dadurch gekennzeichnet, dass**
die Fahrzeugkarosserie (10) im Stoßfängerbereich wenigstens eine senkrecht zu der zu erwartenden Stoßrichtung (30) liegende ebene Stirnfläche (40) aufweist, wobei eine zweite, ebenfalls im wesentlichen senkrecht zu der zu erwartenden Stoßrichtung (30) liegende stirnseitige Wandung (34) des kastenprofilförmigen Metallteils flächig an der ebenen Stirnfläche (40) anliegt.

7. Kraftfahrzeug nach Anspruch 6,
**dadurch gekennzeichnet, dass**
die wenigstens eine ebene Stirnfläche (40) an einem sich im wesentlichen entgegen der zu erwartenden Stoßrichtung (30) erstreckenden Vorsprung (36) vorgesehen ist.

8. Kraftfahrzeug nach Anspruch 6 oder 7,
**dadurch gekennzeichnet, dass**
die Stirnfläche (40) mit einer ersten Bohrung und die an der Stirnfläche (40) flächig anliegende zweite stirnseitige Wandung (34) des kastenprofilförmigen Metallteils mit einer zweiten Bohrung zur Anordnung eines Befestigungsbolzens (32) versehen ist, wobei die erste und/oder die zweite Bohrung so dimensioniert sind, dass der Befestigungsbolzen (32) in der ersten und/oder zweiten Bohrung spielbehaftet aufgenommen werden kann.

9. Kraftfahrzeug nach Anspruch 8,
**dadurch gekennzeichnet, dass**
der Durchmesser der ersten Bohrung im Bereich des doppelten Durchmessers des Befestigungsbolzen (32) liegt.
